Europäisches Patentamt

European Patent Office

Office européen des brevets

(19)

(11)  EP 0 910 912 B1

(12)  FASCICULE DE BREVET EUROPEEN

(45) Date de publication et mention
de la délivrance du brevet:
**17.12.2003 Bulletin 2003/51**

(21) Numéro de dépôt: **97933719.3**

(22) Date de dépôt: **11.07.1997**

(51) Int Cl.⁷: **H04L 12/56**

(86) Numéro de dépôt international:
**PCT/FR97/01287**

(87) Numéro de publication internationale:
**WO 9800/2997 (22.01.1998 Gazette 1998/03)**

(54) **PROCEDE ET DISPOSITIF DE DETECTION DE CONGESTION AMONT AU SEIN D'UN COMMUTATEUR ATM A ARCHITECTURE REPARTIE ET MEMORISATION EN ENTREE**

VERFAHREN UND VORRICHTUNG ZUM FESTSTELLEN VON AUFWÄRTSVERKEHRSÜBERLASTUNG IN EINER ATM-VERMITTLUNGSANORDNUNG MIT VERTEILTER ARCHITEKTUR UND EINGANGSSPEICHERUNG

METHOD AND DEVICE FOR DETECTING UPSTREAM CONGESTION IN AN ATM COMMUTATOR WITH A SWITCHING SYSTEM ARCHITECTURE AND INPUT MEMORISATION

(84) Etats contractants désignés:
**CH DE ES FI FR GB IT LI SE**

(30) Priorité: **12.07.1996 FR 9608734**

(43) Date de publication de la demande:
**28.04.1999 Bulletin 1999/17**

(73) Titulaire: **Thales**
**75008 Paris (FR)**

(72) Inventeurs:
• **BAVANT, Marc, Thomson-CSF S.C.P.I.**
**F-94117 Arcueil Cedex (FR)**
• **DELATTRE, Michel, Thomson-CSF S.C.P.I.**
**F-94117 Arcueil Cedex (FR)**
• **MOUEN MAKOUA, David, Thomson-CSF S.C.P.I.**
**F-94117 Arcueil Cedex (FR)**
• **VIVANT, Colette, Thomson-CSF S.C.P.I.**
**F-94117 Arcueil Cedex (FR)**

(56) Documents cités:
**EP-A- 0 499 150     EP-A- 0 624 015**

• **KOSO MURAKAMI: "ATM SWITCHING SYSTEM ARCHITECTURE AND IMPLEMENTATION OF B-ISDN" PROCEEDINGS OF THE REGION 10 CONFERENCE ON COMPUTER AND COMMUNICATI SYSTEMS (TENCON), HONG KONG, 24 - 27 SEPT., 1990, vol. 2 OF 2, 24 septembre 1990, INSTITUTE OF ELECTRICAL AND ELECTRONICS ENGINEERS, pages 658-662, XP000235955**
• **KAI-YEUNG SIU ET AL: "INTELLIGENT CONGESTION CONTROL FOR ABR SERVICE IN ATM NETWORKS" COMPUTER COMMUNICATIONS REVIEW, vol. 24, no. 5, 1 octobre 1994, pages 81-106, XP000501061**

EP 0 910 912 B1

## Description

La présente invention concerne un procédé de détection de congestion amont au sein d'un commutateur à architecture répartie tel que ceux utilisés dans les réseaux de transmissions de données par paquets, connus sous l'abréviation anglo-saxonne ATM de "*asynchronous transfer mode*".

Elle s'applique notamment à la mise en oeuvre dans les réseaux ATM de la catégorie de service connue sous l'abréviation anglo-saxonne ABR de "available bit rate". Ce service permet à un usager d'utiliser la bande passante disponible sur le trajet d'une connexion préalablement établie sans l'obliger à une réservation statique de ressources lors de l'établissement de la connexion. En contrepartie de cette souplesse, les deux extrémités de la connexion doivent adapter leur débit à la bande passante disponible. A cet effet, des cellules ATM particulières, dénommées cellules RM, de l'abréviation anglo-saxonne *"ressource management*", permettent de renseigner les extrémités d'une connexion sur la disponibilité des ressources dans le réseau. Ces cellules, générées et traitées en temps réel par les équipements d'extrémité aussi bien que par les commutateurs ATM, comportent des champs destinés à convoyer des informations de débit, et notamment le débit ER conseillé par le réseau à la source, ER étant l'abréviation anglo-saxonne de "explicit cell rate".

Les commutateurs qui ont cette capacité calculent le débit ER et l'inscrivent dans les cellules RM. Les différents algorithmes connus pour calculer le débit ER permettent le partage des ressources d'un port de sortie donné, entre les différentes connexions qui passent par ce port. Ces algorithmes ont généralement un fonctionnement différent selon que le commutateur est dans un état d'encombrement ou non, c'est-à-dire selon que le flot de cellules à destination d'un port concerné est plus important que le débit de sortie autorisé sur ce port ou non. À la place du terme "encombrement", le terme "congestion" est utilisé fréquemment avec le sens qu'a ce terme en langue anglaise.

La congestion est en principe exclue pour les catégories de services qui requièrent une réservation statique des ressources qu'elles utilisent. D'ailleurs les cellules ATM correspondant à ces catégories de services sont généralement commutées à la volée, sans mise en attente. Il n'en est pas de même pour les services qui n'imposent pas de réservation de ressources, tel l'ABR, aussi des mémoires tampon sont elles généralement prévues pour absorber les surdébits de cellules, en attendant que les sources diminuent leur débit en réponse aux indications du réseau convoyées dans les cellules RM.

Dans ces conditions, l'encombrement momentané d'un port de sortie d'un commutateur se traduit mécaniquement par une accumulation de cellules à destination de ce port dans les mémoires tampon. Dans le cas d'un commutateur à architecture répartie composé de plusieurs joncteurs d'entrée couplés entre eux par un brasseur, un encombrement momentané d'un port de sortie se traduit par une accumulation dans les joncteurs d'entrée des cellules à destination de ce port. C'est ce qu'on appel la congestion amont. Cette répartition dans les joncteurs d'entrée des cellules à destination d'un port de sortie déterminé, rend difficile l'agrégation des différentes informations partielles concernant les cellules en attente dans chaque joncteur, pour permettre leur comptabilisation.

Le but de l'invention est de résoudre ce problème en définissant les informations à gérer dans chaque joncteur d'entrée et en définissant un moyen d'intégration des informations partielles.

A cet effet, l'invention a pour objet un procédé de détection de congestion amont au sein d'un commutateur ATM à architecture répartie composé de plusieurs joncteurs d'entrée et de sortie pour la transmission dans un réseau de cellules ATM, caractérisé en ce qu'il consiste à compter dans chaque joncteur d'entrée le nombre de cellules entrantes et sortantes à destination d'un port de sortie déterminé d'un joncteur, à transférer les résultats des comptages fournis par les joncteurs d'entrée vers le port de sortie et à déclarer dans le joncteur de sortie une congestion dans le port de sortie si les résultats de comptage sont supérieurs à une valeur de seuil déterminée. L'invention concerne également un dispositif pour la mise en oeuvre d'un tel procédé.

D'autres caractéristiques et avantages de l'invention apparaîtront dans la description qui suit faite en regard des dessins annexés qui représentent :

La figure 1, une représentation simplifiée d'un commutateur ATM utilisée pour la mise en oeuvre de l'invention.
Les figures 2 à 6 des exemples de mise en oeuvre du procédé selon l'invention sous la forme d'organigrammes.

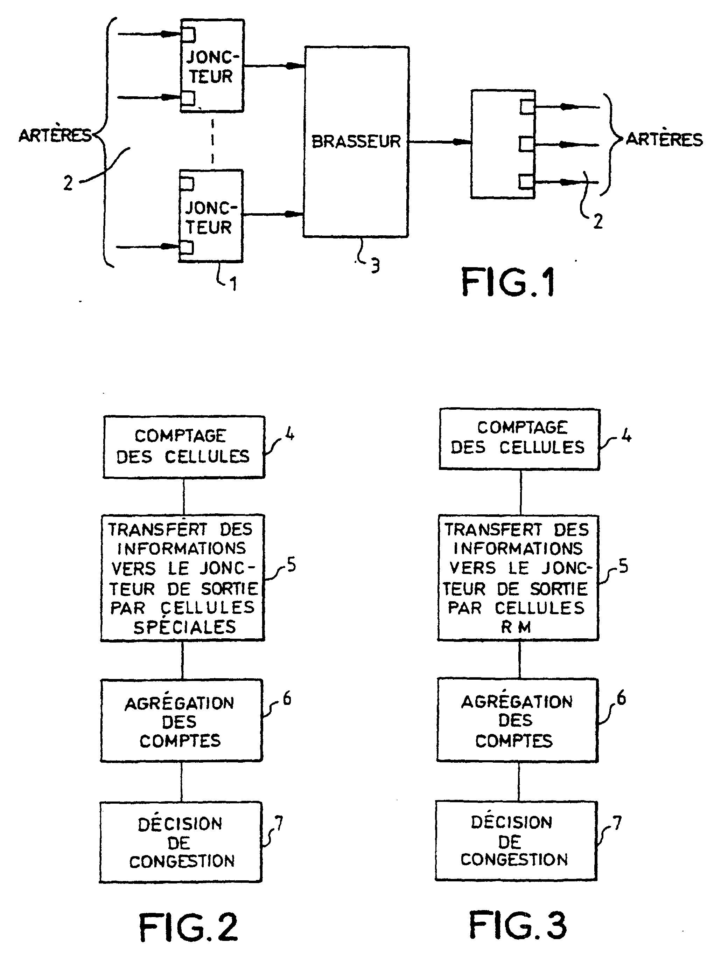

Le commutateur à architecture répartie et mémorisation en entrée qui est représenté à la figure 1 est composé de plusieurs modules ou joncteurs identiques 1 réalisant une interface avec une ou plusieurs artères 2 de communication à haut débit, à fibre optique ou à paire de câble torsadée par exemple. Chacune de ces interfaces étant dénommées dans ce qui suit par port. Les joncteurs 1 sont reliés entre eux par un dispositif de commutation à très haut débit ou brasseur 3 structuré par exemple de la façon décrite dans la demande de brevet FR 2 681 164 déposée au nom de la Demanderesse. Chaque joncteur possède des capacités de traitement suffisantes pour analyser les cellules ATM entrantes, les envoyer directement vers le joncteur ad hoc si ce dernier peut les traiter, ou bien les mémoriser en attendant que ce dernier puisse les traiter. Dans ce qui suit la terminologie "joncteur d'entrée" et joncteur de sortie est utilisée pour préciser qu'une cellule passant dans un commutateur rencontre d'abord un joncteur d'entrée puis est renvoyée dans le réseau par un joncteur de sortie. Il ne s'agit pas d'une classification des joncteurs, tout joncteur est joncteur d'entrée pour certaines cellules et joncteur de sortie pour d'autres. Avec ce type d'architecture un encombrement momentané d'un port de sortie se traduit par l'accumulation dans les joncteurs d'entrée des cellules à destination de ce port. Cet encombrement qui est désigné ci-après par le terme de "congestion" est détecté au niveau de chaque port de sortie par l'exécution d'un procédé qui se déroule suivant les étapes référencées de 4 à 7 sur l'organigramme de la figure 2. Suivant ce procédé la première étape qui est référencée 4 sur la figure 2, consiste à compter dans chaque joncteur d'entrée le nombre de cellules destinées à un même port de sortie. L'identification du port de sortie a lieu par exemple de la façon décrite dans la demande de brevet FR 2 681 164 en lisant dans l'entête de chaque cellule ATM se présentant à l'entrée d'un joncteur, son numéro de faisceau $V_{PI}$ et son numéro de canal $V_{CI}$. Le comptage a lieu en incrémentant et décrémentant un compteur dédié au port de sortie concerné chaque fois qu'une cellule à destination de ce port de sortie entre dans le joncteur d'entrée ou en sort. Une autre variante de comptage peut aussi consister à compter dans chaque joncteur chaque cellule par connexion. Cette deuxième variante apparaît mieux adaptée aux cas des connexions point à multipoint car il peut être plus difficile dans le joncteur d'entrée de mettre à jour en parallèle l'ensemble des compteurs par port concernés par une telle connexion.

La deuxième étape référencée en 5 sur la figure 2 consiste à centraliser l'information collectée dans les compteurs des différents joncteurs dans le joncteur de sortie 2 correspondant. Le transfert a lieu en générant dans chaque joncteur d'entrée concerné des cellules ATM spécifiques, ou en utilisant des cellules RM dont certains champs sont réservés au commutateur. Les transferts peuvent être effectués de différentes façons. Ils peuvent être par exemple strictement périodiques, ou n'avoir lieu que lorsque l'information varie de manière significative ou encore avec une périodicité égale à celle des cellules RM quand celles-ci servent de véhicule à l'information.

L'étape suivante, référencée 6 sur la figure 2, a pour but d'agréger les informations transmises à l'étape précédente dans les joncteurs de sortie 2 pour élaborer une mesure de l'encombrement en cellules des joncteurs d'entrée. Le résultat de cette mesure peut être égal strictement au nombre de cellules en attente si la synchronisation des informations collectées est parfaite. Mais, il est suffisant de limiter la mesure à une simple somme des informations collectées, si les mécanismes de mis à jour des informations sont suffisamment fréquents et efficaces.

La mesure peut aussi consister en un simple calcul d'une moyenne effectuée sur les informations collectées par un calcul de moyenne exponentielle par exemple telle que rappelé en Annexe 1.

Enfin lors de la dernière étape référencée 7 sur la figure 2, la mesure obtenue à l'étape référencée 6 est exploitée pour décider si oui ou non chaque port de sortie considéré est soumis à un flux de cellules dont le débit est supérieur à ce que lui permettent ses caractéristiques physiques. Ceci peut être réalisé en conjuguant un critère dynamique, tel que l'augmentation significative de la mesure d'encombrement par exemple à un critère statique tel que par exemple, le fait que la mesure dépasse un seuil, pour décréter qu'un port de sortie est en congestion si l'un de ces deux critères est satisfait.

Trois variantes de mise en oeuvre du procédé selon l'invention qui vient d'être décrit sont représentées aux figures 3 à 5 où les étapes homologues à celles de la figure 2 sont représentées avec les mêmes références.

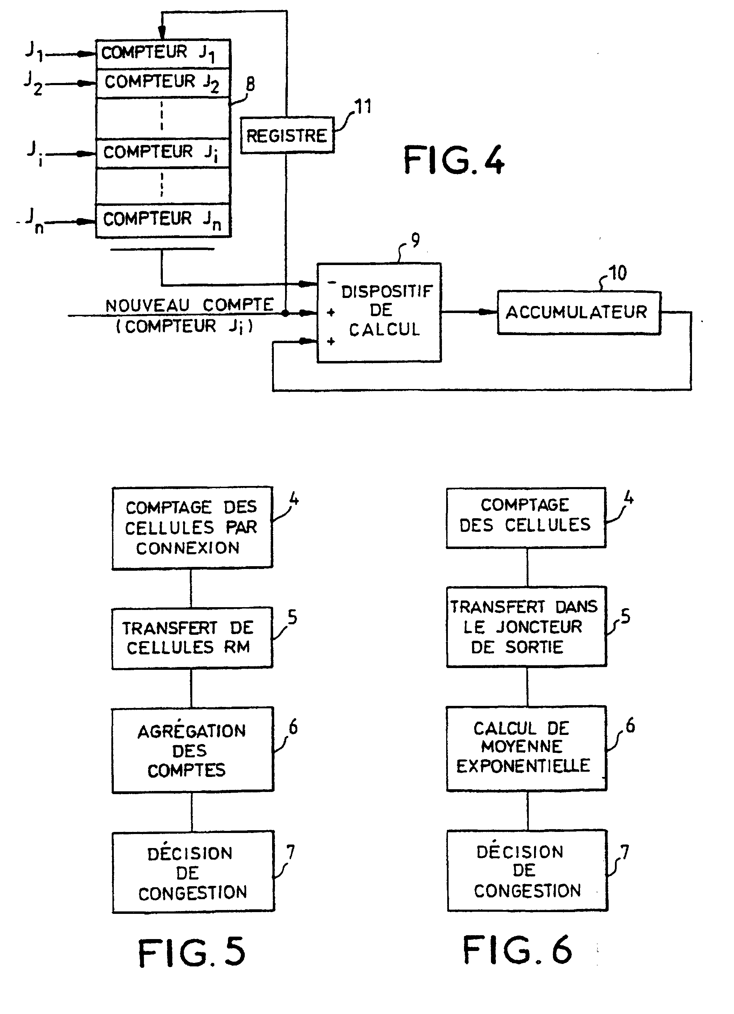

Une première variante représentée sur la figure 3 consiste à utiliser pour l'exécution de l'étape référencée 4 un compteur par port de sortie dans chaque joncteur d'entrée en faisant l'hypothèse que chaque joncteur 1 ne comporte qu'un seul port de sortie et à utiliser à l'étape 5 pour le transfert de l'information vers les joncteurs de sortie des cellules RM comme véhicules. Dans ce transfert, le joncteur d'entrée inscrit dans chaque cellule RM la valeur du compteur de cellules à destination du port de sortie de cette cellule avec son propre identifiant. A l'étape référencée 6 le joncteur de sortie, entretient une mesure qui est la somme des informations reçues de chaque joncteur, en faisant contribuer chaque joncteur par l'information la plus récente qu'il lui a envoyée de la façon représentée à la figure 4, par la mise à jour dans le joncteur de sortie d'une table 8 de mémorisation des informations reçues qui possède autant d'entrées qu'il existe de joncteurs d'entrée dans le commutateur. Chaque entrée notée $J_1$ à $J_n$ sur la figure 4, adresse une zone de comptage qui mémorise l'état d'un compteur correspondant dans un joncteur d'entrée et qui est mis à jour chaque fois qu'à l'étape marquée 5, un transfert du contenu du compteur du joncteur correspondant est reçu dans le joncteur de sortie. Dans ces conditions chaque nouvelle contribution d'un compteur de joncteur d'entrée s'obtient en soustrayant dans un dispositif de calcul 9, la valeur de son ancien compte mémorisé dans la table 8 à la valeur de son nouveau compte et cette contribution est ajoutée dans le dispositif de calcul 9 au contenu d'un registre accumulateur 10 qui accumule à son contenu chaque nouvelle contribution reçue d'un joncteur d'entrée. La mise à jour de la table 8 s'effectue à l'arrivée de chaque nouveau compte par l'intermédiaire d'un registre 11. Par ailleurs un mécanisme de défense non représenté prévient chaque joncteur de la mise en service et hors service de l'un quelconque des autres joncteurs, afin que ceux-ci puissent gérer convenablement la table 8 et la mesure d'encombrement. La détection de la congestion de l'étape référencée 7 est effectuée par conjonction d'un critère dynamique et d'un critère statique portant sur la mesure d'encombrement décrite précédemment. Un microprogramme écrit en langage C et permettant l'exécution des étapes référencées 6 et 7 est détaillée à l'annexe 2.

Dans la deuxième variante représentée à la figure 5, l'étape référencée 4 met en oeuvre des compteurs par connexion dans chaque port d'entrée.

Le transfert de l'information contenue dans un compteur à destination d'un port de sortie a lieu à l'étape référencée 5 en utilisant une cellule RM comme véhicule. Le joncteur d'entrée correspondant inscrit dans chaque cellule RM la valeur du compteur de cellules en attente pour la connexion concernée. Les étapes référencées 6 et 7 sont similaires à celles de la première variante à la différence toutefois de l'adressage des zones de comptage de la table 8 qui s'effectue pour chaque connexion. Un mécanisme de défense non représenté prévient chaque joncteur de l'établissement et de la libération des connexions passant par lui, afin que le joncteur puisse gérer convenablement la table 8 et la mesure de l'encombrement.. Un microprogramme correspondant écrit en langage C est détaillé en l'annexe 3.

Enfin selon une troisième variante qui est représentée à la figure 6, le procédé de la figure 5 peut être modifié dans sa troisième étape référencée en 6 en effectuant la mesure d'encombrement sur chaque port de sortie d'un joncteur de sortie, par un calcul de moyenne exponentielle des informations de comptage reçues pour chaque connexion passant par le port de sortie concerné. D'après le principe même de la moyenne exponentielle, détaillée à l'annexe 1, l'influence d'une contribution à un instant donné sur la somme s'estompe progressivement. Dans ce cas, aucun mécanisme de défense particulier n'est à prévoir, car une connexion qui disparaît perd rapidement toute influence sur la mesure du fait qu'elle n'y contribue pas. Aussi, le fait de transporter l'information de comptage dans les cellules RM a l'avantage de donner plus de poids aux connexions de fort débit car celles-ci émettent des cellules RM plus fréquemment. Un microprogramme correspondant écrit en langage C pour l'exécution de cette troisième étape est décrit à l'annexe 4.

**Annexe 1 :**

La "moyenne exponentielle" (*exponential mean*) n'est rien d'autre que le résultat d'un filtrage linéaire du premier ordre à temps discret. Si $u_n$ désigne la suite des valeurs d'entrée et $x_n$ la suite des états du filtre, l'équation d'état du filtre peut s'écrire :

$$x_{n+1} = a \cdot x_n + (1 - a) \cdot u_n \qquad [1]$$

où a est un paramètre inférieur à 1, proche de 1, qui définit l'horizon du filtre. La suite $x_n$ représente ainsi une sorte de moyenne instantanée à plus ou moins long terme des entrées.

Dans l'application envisagée, les valeurs d'entrée un représentent des nombres de cellules. Afin d'éviter les calculs à virgule flottante et les multiplications, on utilisera pour a la valeur remarquable 7/8 et on moyennera les valeurs $U_n = 4 * u_n$ pour garder une précision suffisante malgré la troncature. La mesure d'encombrement est donc donnée par:

$$X_{n+1} = ((X_n << 3) - X_n + U_n) >> 3 \qquad [2]$$

**Annexe 2 :**

variables rémanentes :

t_word_32 total, ancien_total
t_word_16 ancien_compteurt[<nombre de joncteurs dans le commutateur>]
t_boolean etat_congestion

traitement initialisation:

etat_congestion = false
for (j in ancien_compteur) ancien_compteur[j] = 0
total = ancien_total = 0

traitement cellule FRM:

# récupération et agrégation des informations
total = total + cell.payload.compteur -
    ancien_compteur[cell.payload.origine]
ancien_compteur[cell.payload.origine] = cell.payload.compteur
# calcul de l'état de congestion
etat_congestion = (total > ancien_total) ‖ (total > 50)
ancien_total = total

**Annexe 3 :**

variables rémanentes:

t_word_32 total
t_word_16 ancien_compteur[<nombre de connexions>]

traitement initialisation:

for (j in ancien_compteur) ancien_compteur[j] = 0
total = 0

traitement cellule FRM:

# récupération et agrégation des informations
total = total + cell.payload.compteur -
    ancien_compteur[cell.vpi_vci]
ancien_compteur[cell.vpi_vci] = cell.payload.compteur

**Annexe 4 :**

variables rémanentes :

t_word_32 total

traitement initialisation:

total = 0

traitement cellule FRM:

# récupération et agrégation des informations
total = (total << 3 - total + cell.payload.compteur << 2)
>> 3

**Revendications**

1. Procédé de détection de congestion amont au sein d'un commutateur ATM à architecture répartie composé de plusieurs joncteurs (1) d'entrée et de sortie pour la transmssion dans un réseau de cellules ATM, **caractérisé en ce qu'**il comporte au moins les étapes suivantes :

   • compter (4) dans chaque joncteur d'entrée le nombre de cellules entrantes et sortantes à destination d'un port de sortie déterminé d'un joncteur de sortie,
   • transférer (5) les résultats des comptages fournis par les joncteurs d'entrée vers le joncteur de sortie,
   • déclarer (7), dans le joncteur de sortie, une congestion du port de sortie en comparant les résultats de comptage à une valeur de seuil déterminée.

2. Procédé selon la revendication 1 **caractérisé en ce que** l'étape de déclaration de congestion comporte une étape d'agrégation des résultats des comptages dans le joncteur de sortie.

3. Procédé selon la revendication 1 **caractérisé en ce que** l'étape de transfert des résultats consiste à insérer dans une cellule les résultats de comptage.

4. Procédé selon la revendication 3 **caractérisé en ce que** la cellule est une cellule ATM spécifique.

5. Procédé selon la revendication 3 **caractérisé en ce que** la cellule est une cellule RM.

6. Procédé selon l'une quelconque des revendications 1 à 5, **caractérisé en ce qu'**il consiste pour agréger les résultats de comptage à mémoriser les résultats de comptage dans une table (8) du joncteur de sortie, à soustraire (9) du nouveau résultat de comptage fourni par un joncteur d'entrée le résultat de comptage précédent qui est mémorisé dans la table (8) du joncteur de sortie et à accumuler (10) dans un accumulateur les résultats des soustractions obtenus.

7. Procédé selon l'une quelconque des revendications 1 à 5, **caractérisé en ce qu'**il consiste pour déterminer (6) une congestion sur un port de sortie à calculer la moyenne exponentielle des résultats de comptage reçus pour chaque connexion passant par le port de sortie.

8. Dispositif de détection de congestion amont au sein d'un commutateur ATM à architecture répartie composé de plusieurs joncteurs (1) d'entrée et de sortie pour la transmission dans un réseau de cellules ATM, **caractérisé en ce qu'**il comporte au moins

   • un dispositif (4) adapté à compter dans chaque joncteur d'entrée le nombre de cellules entrantes et sortantes à destination d'un port de sortie déterminé d'un joncteur,
   • des moyens pour transférer (5) les résultats des comptages fournis par les joncteurs d'entrée vers le port de sortie,
   • un dispositif pour déclarer (7) une congestion dans le port de sortie en fonction d'une valeur de seuil déterminée.

9. Dispositif selon la revendication 8 **caractérisé en ce que** le dispositif pour déclarer une congestion comporte des moyens pour agréger les résultats des comptages dans le port de sortie.

10. Dispositif selon la revendication 8 **caractérisé en ce que** lesdits moyens de transfert des résultats de comptage sont adaptés pour insérer les résultats dans une cellule et pour l'extraire de ladite cellule.

11. Dispositif selon la revendication 10 **caractérisé en ce que** la cellule est une cellule ATM spécifique.

12. Dispositif selon la revendication 10 **caractérisé en ce que** la cellule est une cellule RM.

13. Dispositif selon l'une des revendications 8 à 12 **caractérisé en ce qu'**il comporte une table (8) dans le joncteur de sortie pour mémoriser les résultats de comptage, un dispositif adapté à soustraire du nouveau résultat de comptage fourni par un joncteur d'entrée le résultat de comptage fourni par un joncteur d'entrée le résultat de comptage précédent mémorisé dans la table (8) du joncteur de sortie et un accumulateur pour les résultats des soustractions obtenus.

14. Dispositif selon l'une des revendications 8 à 13 **ca-**

**ractérisé en ce qu'**il comporte des moyens adaptés à calculer la moyenne exponentielle des résultats de comptage reçus pour chaque connexion passant par le port de sortie.

## Patentansprüche

1. Verfahren zur Erfassung eines Eingangs-Datenstaus in einem ATM-Schalter mit verteilter Struktur, der aus mehreren Eingangsverbindern (1) und Ausgangsverbindern für die Datenübertragung in einem Netz von ATM-Zellen gebildet wird, **dadurch gekennzeichnet, daß** es mindestens die folgenden Schritte aufweist:

 ☙ in jedem Eingangsverbinder wird die Anzahl von ankommenden und in Richtung auf einen bestimmten Ausgangsport eines Ausgangsverbinders abgehenden Zellen gezählt (4),
 ☙ die von den Eingangsverbindern gelieferten Zählergebnisse werden an den Ausgangsverbinder übertragen (5),
 ☙ im Ausgangsverbinder wird ein Stau des Ausgangsports durch Vergleich der Zählergebnisse mit einem bestimmten Schwellwert erklärt (7).

2. Verfahren nach Anspruch 1, **dadurch gekennzeichnet, daß** der Schritt der Erklärung eines Staus einen Schritt der Zusammenfassung der Zählergebnisse in dem Ausgangsverbinder enthält.

3. Verfahren nach Anspruch 1, **dadurch gekennzeichnet, daß** der Schritt der Übertragung der Ergebnisse darin besteht, die Zählergebnisse in eine Zelle einzufügen.

4. Verfahren nach Anspruch 3, **dadurch gekennzeichnet, daß** die Zelle eine besondere ATM-Zelle ist.

5. Verfahren nach Anspruch 3, **dadurch gekennzeichnet, daß** die Zelle eine RM-Zelle ist.

6. Verfahren nach einem beliebigen der Ansprüche 1 bis 5, **dadurch gekennzeichnet, daß** es darin besteht, bei der Zusammenfassung der Zählergebnisse diese in einer Tabelle (8) des Ausgangsverbinders zu speichern, vom neuen Zählergebnis, das von einem Eingangsverbinder geliefert wird, das vorherige Zählergebnis abzuziehen (9), das in der Tabelle (8) des Ausgangsverbinders gespeichert ist, und in einem Akkumulator die Ergebnisse der erhalten Subtraktionen zu akkumulieren (10).

7. Verfahren nach einem beliebigen der Ansprüche 1 bis 5, **dadurch gekennzeichnet, daß** es darin besteht, zur Bestimmung (6) eines Datenstaus an einem Ausgangsport den exponentiellen Mittelwert der Zählergebnisse, die für jede über den Ausgangsport verlaufende Verbindung empfangen wurden, zu berechnen.

8. Vorrichtung zur Erfassung eines Datenstaus am Eingang eines ATM-Schalters mit verteilter Struktur, der aus mehreren Eingangsverbindern (1) und Ausgangsverbindern besteht, für die Übertragung von Zellen in einem ATM-Netz, **dadurch gekennzeichnet, daß** sie mindestens aufweist:

 ☙ eine Vorrichtung (4), die in jedem Eingangsverbinder die Anzahl der ankommenden und in Richtung auf einen bestimmten Ausgangsport eines Ausgangsverbinders abgehenden Zellen zählen kann,
 ☙ Mittel, um die von den Eingangsverbindern gelieferten Zählergebnisse an den Ausgangsverbinder zu übertragen (5),
 ☙ und eine Vorrichtung, um einen Stau im Ausgangsport abhängig von einem bestimmten Schwellwert zu erklären (7).

9. Vorrichtung nach Anspruch 8, **dadurch gekennzeichnet, daß** die Vorrichtung, die einen Stau erklärt, Mittel aufweist, um die Zählergebnisse im Ausgangsport zusammenzufassen.

10. Vorrichtung nach Anspruch 8, **dadurch gekennzeichnet, daß** die Mittel, die die Zählergebnisse übertragen, geeignet sind, die Ergebnisse in eine Zelle einzufügen und aus der Zelle zu entnehmen.

11. Vorrichtung nach Anspruch 10, **dadurch gekennzeichnet, daß** die Zelle eine besondere ATM-Zetle ist.

12. Vorrichtung nach Anspruch 10, **dadurch gekennzeichnet, daß** die Zelle eine RM-Zelle ist.

13. Vorrichtung nach einem der Ansprüche 8 bis 12, **dadurch gekennzeichnet, daß** sie eine Tabelle (8) im Ausgangsverbinder zur Speicherung der Zählergebnisse, eine Vorrichtung, die vom Zählergebnis, das vom Eingangsverbinder geliefert wird, das vorhergehende und in der Tabelle (8) gespeicherte Zählergebnis des Ausgangsverbinders abzieht, und einen Akkumulator für die Ergebnisse der erhaltenen Subtraktionen enthält.

14. Vorrichtung nach einem der Ansprüche 8 bis 13, **dadurch gekennzeichnet, daß** sie Mittel aufweist, um den exponentiellen Mittelwert der Zählergebnisse zu berechnen, die für jede über den Ausgangsport verlaufende Verbindung erhalten wurden.

## Claims

1. Process for detecting upstream congestion within a distributed-architecture ATM switch composed of several input and output junctors (1) for the transmission in a network of ATM cells, **characterized in that** it comprises at least the following steps:

   - counting (4) in each input junctor the number of incoming and outgoing cells destined for a specified output port of an output junctor,
   - transferring (5) the results of the counts provided by the input junctors to the output junctor,
   - declaring (7), in the output junctor, congestion of the output port by comparing the counting results with a specified threshold value.

2. Process according to Claim 1, **characterized in that** the step of declaring congestion comprises a step of aggregating the results of the counts in the output junctor.

3. Process according to Claim 1, **characterized in that** the step of transferring the results consists in inserting the counting results into a cell.

4. Process according to Claim 3, **characterized in that** the cell is a specific ATM cell.

5. Process according to Claim 3, **characterized in that** the cell is an RM cell.

6. Process according to any one of Claims 1 to 5, **characterized in that** in order to aggregate the counting results it consists in storing the counting results in a table (8) of the output junctor, in subtracting (9) from the new counting result provided by an input junctor the previous counting result which is stored in the table (8) of the output junctor and in accumulating (10) in an accumulator the results obtained from the subtractions.

7. Process according to any one of Claims 1 to 5, **characterized in that** in order to determine (6) congestion on an output port it consists in calculating the exponential mean of the counting results received for each connection passing through the output port.

8. Device for detecting upstream congestion within a distributed-architecture ATM switch composed of several input and output junctors (1) for the transmission in a network of ATM cells, **characterized in that** it comprises at least

   - a device (4) adapted for counting in each input junctor the number of incoming and outgoing cells destined for a specified output port of a junctor,
   - means for transferring (5) the results of the counts provided by the input junctors to the output junctor,
   - a device for declaring (7) congestion in the output port as a function of a specified threshold value.

9. Device according to Claim 8, **characterized in that** the device for declaring congestion comprises means for aggregating the results of the counts in the output port.

10. Device according to Claim 8, **characterized in that** said means of transferring the counting results are adapted for inserting the results into a cell and for extracting it from the said cell.

11. Device according to Claim 10, **characterized in that** the cell is a specific ATM cell.

12. Device according to Claim 10, **characterized in that** the cell is an RM cell.

13. Device according to one of Claims 8 to 12, **characterized in that** it comprises a table (8) in the output junctor for storing the counting results, a device adapted for subtracting from the new counting result provided by an input junctor the previous counting result stored in the table (8) of the output junctor and an accumulator for the results obtained from the subtractions.

14. Device according to one of Claims 8 to 13, **characterized in that** it comprises means adapted for calculating the exponential mean of the counting results received for each connection passing through the output port.

ARTÈRES

JONC-
TEUR

BRASSEUR

ARTÈRES

JONC-
TEUR

FIG.1

COMPTAGE
DES CELLULES 4

TRANSFERT DES
INFORMATIONS
VERS LE JONC-
TEUR DE SORTIE 5
PAR CELLULES
SPÉCIALES

AGRÉGATION
DES
COMPTES 6

DÉCISION
DE
CONGESTION 7

FIG.2

COMPTAGE
DES CELLULES 4

TRANSFERT DES
INFORMATIONS
VERS LE JONC-
TEUR DE SORTIE 5
PAR CELLULES
R M

AGRÉGATION
DES
COMPTES 6

DÉCISION
DE
CONGESTION 7

FIG.3

$J_1 \longrightarrow$ COMPTEUR $J_1$

$J_2 \longrightarrow$ COMPTEUR $J_2$

8

$J_i \longrightarrow$ COMPTEUR $J_i$

$J_n \longrightarrow$ COMPTEUR $J_n$

11

REGISTRE

FIG.4

9

DISPOSITIF DE CALCUL

NOUVEAU COMPTE
(COMPTEUR $J_i$)

10

ACCUMULATEUR

---

COMPTAGE DES CELLULES PAR CONNEXION — 4

TRANSFERT DE CELLULES RM — 5

AGRÉGATION DES COMPTES — 6

DÉCISION DE CONGESTION — 7

FIG.5

---

COMPTAGE DES CELLULES — 4

TRANSFERT DANS LE JONCTEUR DE SORTIE — 5

CALCUL DE MOYENNE EXPONENTIELLE — 6

DÉCISION DE CONGESTION — 7

FIG.6